# EUROPEAN PATENT SPECIFICATION

(11) **EP 2 442 314 B1**
(45) Date of publication and mention of the grant of the patent: **22.05.2013**
(21) Application number: 11185689.4
(22) Date of filing: 18.10.2011
(51) Int. Cl.: G21C 19/18, G21C 19/20, G21C 19/19

(54) **Auxiliary system for assisting a movement system of fuel elements of a nuclear reactor**
Hilfssystem zur Unterstützung eines Bewegungssystems für Kernreaktor-Brennelemente
Système auxiliaire pour assister un système de déplacement d'un élément combustible d'un réacteur nucléaire

(30) Priority: 18.10.2010 IT MI20101903
(43) Date of publication of application: 18.04.2012
(73) Proprietor: Ansaldo Nucleare S.p.A., Genova (IT)
(72) Inventor: Orzelli, Francesco, 17025 Loano (IT)
(74) Representative: Jorio, Paolo

(56) References cited:
- DE-A1- 10 001 634
- US-A- 5 526 384
- US-A- 5 737 377

## Description

The present invention relates to an auxiliary system for assisting a movement system of fuel elements of a nuclear reactor.

In particular, the invention provides a movement and lock device for the tool which assists the insertion of fuel elements, in particular radiated fuel elements, into the reactor.

The fuel elements of a nuclear reactor, normally square-section prismatic shaped, are normally constrained between a lower plate and an upper plate.

According to a known configuration, the lower plate has centering pins which engage respective holes formed in the fuel elements; typically, the lower plate has two pins for each fuel element.

During the operation of the reactor, the fuel elements tend to be deformed, in particular to bend; the fuel elements are then periodically moved from the periphery towards the centre of the reactor. It is apparent that if a fuel element is deformed, its insertion in the centering pins becomes difficult.

The problem of facilitating the insertion, or, in all cases, the positioning of the fuel elements, specifically those already radiated and consequently deformed, thus arises.

Aligning and/or guiding systems for facilitating the installation of the fuel elements are thus known, for example from DE10001634-A1 and US5526384-A.

The known systems, in all cases, appear to have margins for improvement, above all in terms of simplicity of manufacturing and use, efficacy and reliability.

It is an object of the present invention to provide a movement system of fuel elements of a nuclear reactor comprising an auxiliary system for assisting the positioning of the fuel elements, which is particularly simple to make and use, as well efficient and reliable at the same time.

Thus, the present invention relates to an auxiliary system for assisting a movement system of fuel elements of a nuclear reactor, as defined in essential terms in appended claim 1, and the additional features of which are disclosed in the dependent claims.

The system according to the invention allows an effective positioning of the fuel elements, because it is particularly simple to make and use, as well as being fully reliable.

Further features and advantages of the present invention will be apparent from the following description of a non-limitative embodiment thereof, with reference to the figures of the accompanying drawings, in which:
- figure 1 is a diagrammatic side elevation view of a movement system of fuel elements of a nuclear reactor comprising an auxiliary system for assisting the positioning of the fuel elements made in accordance with the invention;
- figure 2 is an enlarged scale view of the detail enclosed in the circle in figure 1;
- figure 3 is a perspective view of a component of the auxiliary system shown in figure 1, and specifically of a moveable guide tool;
- figure 4 is a partial perspective view of a grab member belonging to the movement system in figure 1;
- figure 5 is a partially exploded diagrammatic view, with parts removed for clarity, of a detail of the auxiliary system in figure 1;
- figure 6 is an exploded perspective view of the detail in figure 5;
- figure 7 diagrammatically shows the operation of the auxiliary system shown in figure 1.

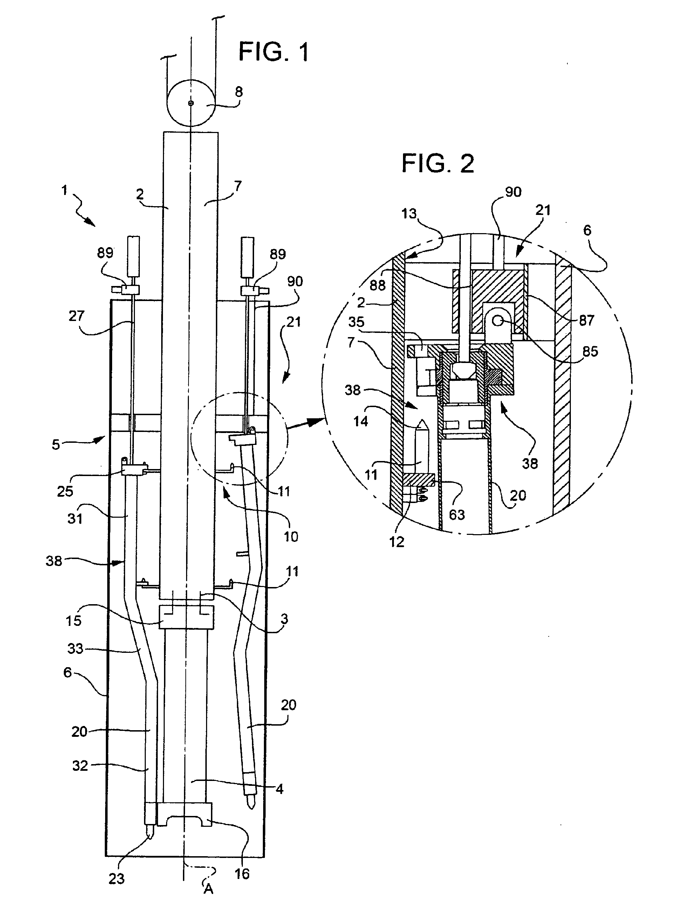

Figure 1 diagrammatically shows a movement system of fuel elements of a nuclear reactor, indicated by reference numeral 1 as a whole.

The system 1 comprises: a moveable grab member 2, provided with a gripper 3 for gripping a fuel element 4; an auxiliary system 5 for assisting the positioning of the fuel element 4 carried by the grab member 2; a fixed supporting structure 6 (fixed or fixable to a part of the reactor).

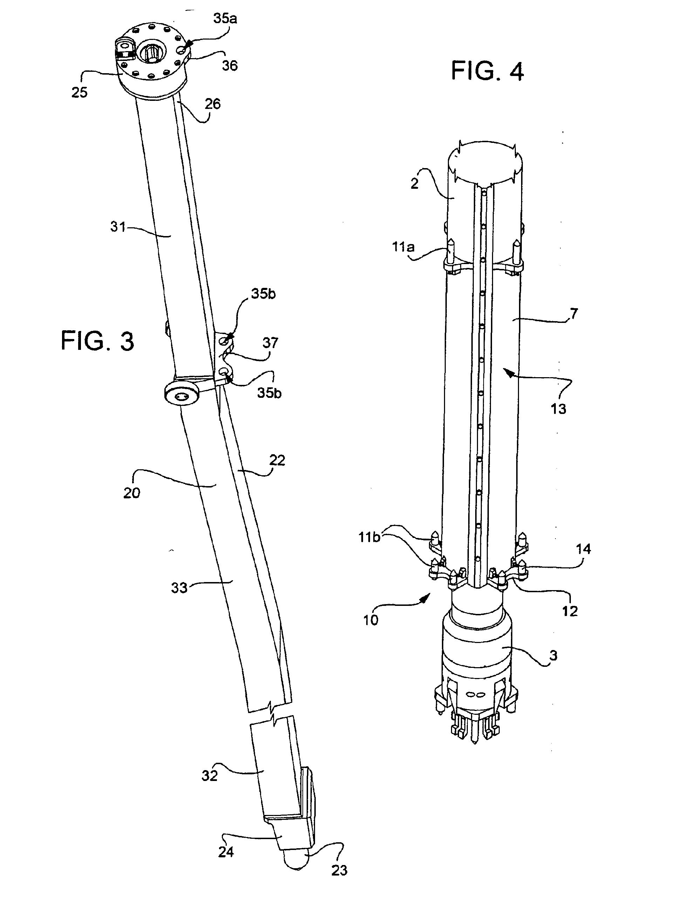

With reference also to figures 2 and 4, the grab member 2 extends along an axis A (vertical in use) and comprises a substantially rectilinear arm 7, extending along axis A, and the gripper 3, which is set at a lower end of the arm 7; the grab member 2 is moved by a known operating system 8, only partially and diagrammatically shown in figure 1, which allows to shift the grab member 2 vertically and horizontally, as well as actuate the gripper 3 for selectively grip and release the fuel element 4.

The arm 7 of the grab member 2 is provided with at least one group 10 of male connection elements 11 which extend laterally from the arm 7; the group 10 comprises at least two elements 11, set axially spaced apart along the arm 7; preferably, the group 10 comprises an upper element 11a and a pair of lower elements 11b, set below the upper element 11a.

In the example shown, each element 11 is essentially L-shaped and comprises a shelf 12, which extends radially and overhangingly from a side surface 13 of the arm 7, and a pin 14, which projects vertically upwards from the shelf 12 and is essentially parallel to axis A.

Preferably, the arm 7 has several groups 10 of elements 11 angularly distributed about axis A on the side surface 13 of the arm 7; in particular, the arm 7 has four groups 10 of elements 11 set at 90° with respect to one another.

The fuel element 4 is of the known type and will therefore not be described nor illustrated for the sake of simplicity; in general, the fuel element 4 has a prismatic shape and polygonal cross section and has an upper head 15 and a lower foot 16. The head 15 is shaped so as to be engaged by the gripper 3; the foot 16 has one or more seats intended to cooperate with the centering pins carried by a base plate of the reactor (not shown).

The auxiliary system 5 has the function of assisting the grab member 2 for facilitating the insertion and position of the fuel elements in the reactor.

In particular, with reference to figures 1-3, the system 5 comprises a moveable guide tool 20, cooperating with the grab member 2 for guiding the fuel element 4, and a movement and lock device 21 acting on the tool 20 for connecting in a releasable manner the tool 20 to the grab member 2, and specifically for:
- moving the tool 20 with respect to the grab member 2 between a resting position (right side of figure 1 and figure 2), in which the tool 20 is supported by the structure 6 and fixed thereto, and a working position (left side in figure 1), in which the tool 20 is integrally coupled to the grab member 2; and
- selectively locking the tool 20 on the grab member 2 and releasing the tool 20 from the grab member 2.

As shown in greater detail in figures 3, 5 and 6, the tool 20 comprises a bar 22, generally facing the arm 7 of the grab member 2 and provided with a centering pin 23 protruding from a lower end 24 of the bar 22, and a control head 25, set at an upper end 26 of the bar 22 and cooperating with an operation rod 21.

The head 25 and the rod 27 extend along an axis X which is parallel to axis A when the tool 20 is in working position, while it is inclined with respect to axis A when the tool 20 is in resting position.

The bar 22 has an upper segment 31 and a lower segment, essentially rectilinear, set by the side and spaced apart from each other, and an oblique segment 33 which connects the segments 31, 32; the bar 22 is set so that the lower segment 32 is closer to the grab member 2 than the upper segment 31; the centering pin 23 axially protrudes downwards from the lower segment 32 to engage a hole formed, for example, in the base plate of the reactor (e.g. one of the holes provided for primary cooling fluid circulation).

The tool 20 is provided with female connection elements 34, cooperating with the male connection elements 11; in particular, the elements 34 comprise respective seats 35, and precisely at least two seats 35 set longitudinally spaced apart along the tool 20; in the example shown, the tool 20 has an upper seat 35a, formed, for example, by a peripheral portion 36 of the head 25, and a pair of lower seats 35b, set lower in the seat 35a and, for example, formed on a shelf 37 which extends laterally from the bar 22.

The elements 11, 34 (which may be set on the grab member 2 and on the tool 20, respectively, as shown in the example here, or vice versa) cooperate for coupling in releasable manner the tool 20 to the grab member 2 and lock the tool 20 with respect to the grab member 2 both angularly, in both rotation directions about axis X, and axially in a first translation direction along axis X (downwards), in particular preventing the tool 20 from translating vertically downwards with respect to the grab member 2 (while the tool 20 remains free to move vertically upwards with respect to the grab member 2).

To lock the upwards translation of the tool 20 with respect to the grab member 2, the device 21 comprises a moveable releasable safety mechanism 38 for axially locking the tool 20 with respect to the grab member 2 also in a second rotation direction along axis X (upwards), opposite to the first rotation direction (downwards), and to prevent the release of the connection elements 11, 34.

The safety mechanism 38 is housed in part in the head 25, and mainly comprises: a frame 41, fixed to the end 26 of the bar 22; a locking ring 42, inserted in a rotation seat 43 formed in the frame 41; a latch 44, housed in the locking ring 42; a cover 45, coupled to the frame 41 for enclosing the locking ring 42.

The frame 41 has an inner cavity 46 which comprises a rotation seat 43, in which is rotationally housed a portion 47 of the locking ring 42, and a slide seat 48, located under the rotation seat 43 and in which is axially sliding the latch 44.

The rotation seat 43 is substantially cylindrical and has an axial shoulder 49 facing upwards and on which the locking ring 42 rests.

The slide seat 48 is configured to receive a lower connection portion 50 of the latch 44 when the latch 44 slides downwards through the locking ring 42; the slide seat 48 has a grooved profile for angular coupling with the latch 44: in particular, the slide seat 48 is provided with one or more longitudinal grooves 51 (parallel to axis X) available to be engaged by the respective radially external longitudinal ribs 52 of the latch 44 when the connection portion 50 occupies the slide seat 48, so as to integrally angularly couple the latch 44 to the frame 41.

The frame 41 is provided with a radially outer flange 53 set about an upper inlet opening 54 of the cavity 46; the flange 53, for example, substantially circular, has a notch 55 formed axially through a peripheral edge 56 of the flange 53.

The locking ring 42 comprises a tubular body 57 within which is housed in axially sliding manner the latch 44 and having an inner grooved profile engaged by the latch 44; in particular, an inner side surface of the locking ring 42 has one or more longitudinal grooves 61 (parallel to axis X) engaged by the ribs 52 of the latch 44.

The locking ring 42 is provided with an axial locking element 62, cooperating with a corresponding abutment element 63 of the grab member 2 for axially and integrally coupling the head 15 (and thus the tool 20 as a whole) and the grab member 2, specifically preventing the tool 20 from shifting axially (vertically) upwards with respect to the grab member 2. The axial locking element 62 and the corresponding abutment element 63 define an axial coupling 64 releasable between the tool 20 and the grab member 2; the axial locking element 62 selectively engages and releases the abutment element 63 by rotation of the locking ring 42 about axis X. In the non-limiting example shown, the axial locking element 62 comprises a radially outer annular disc 65 set about the body 57 of the locking ring 42; the disc 65 rests on the flange 53 of the frame 41 and delimits the portion 47 of the locking ring 42; a radially outer peripheral edge 66 of the disc 65 has an axially through groove 67, the function of which is explained below. The portion 47 is accommodated in the rotation seat 43; the locking ring 42 is rotational about axis X with respect to the frame 41.

The latch 44 is accommodated in the locking ring 42 and is free to slide axially in the locking ring 42 along axis X; the latch 44 is provided, as already mentioned, with one or more radially outer longitudinal ribs 52 (parallel to axis X), which extend radially from an outer side surface of the latch 44 and engage respective grooves 61 of the locking nut 42 to angularly integrally couple the latch 44 to the locking ring 42.

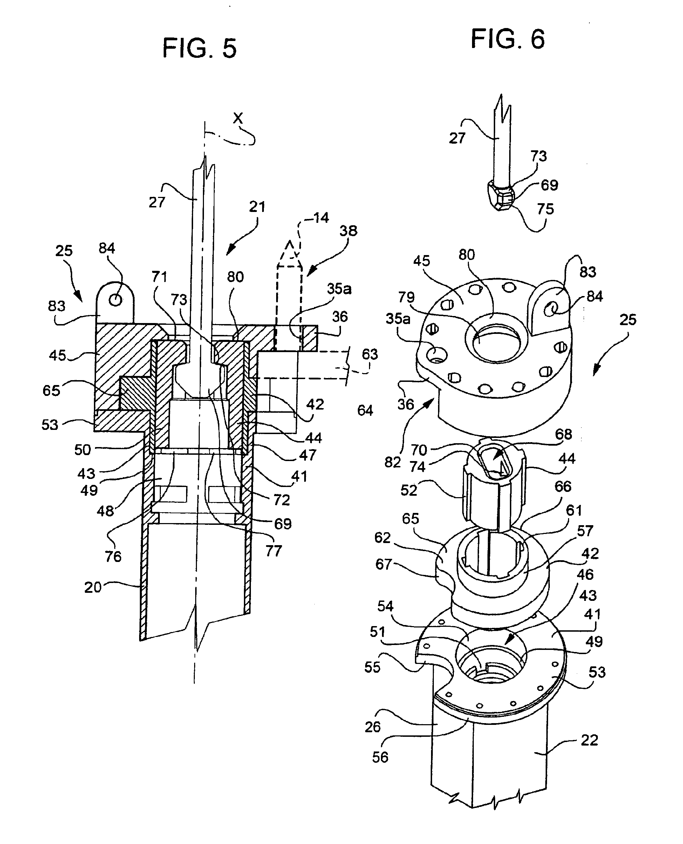

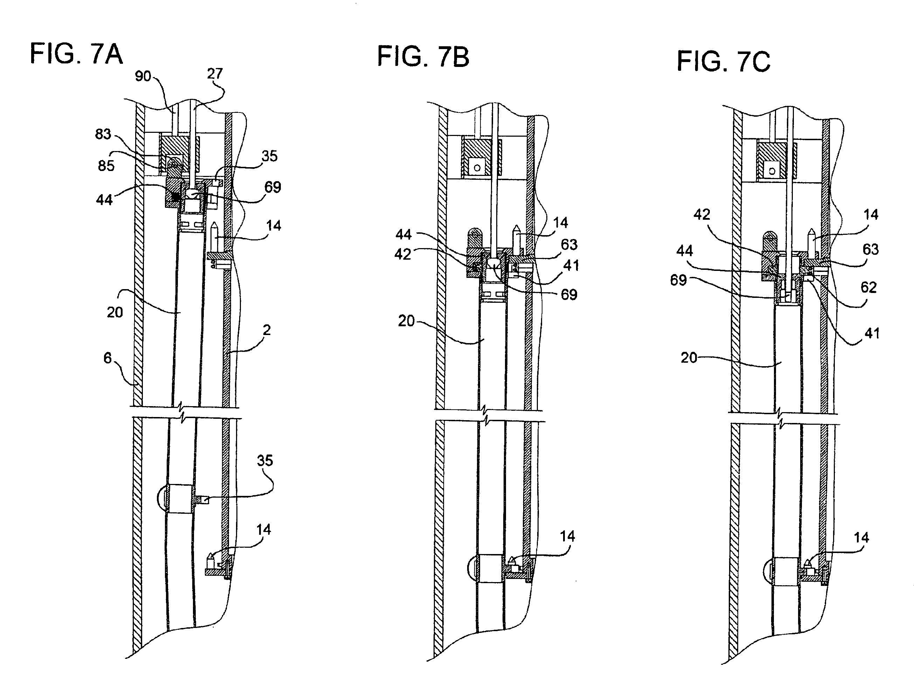

The latch 44 slides between an upper position (figure 5 and figure 7B), in which the latch 44 does not protrude inferiorly out of the locking ring 42 and the ribs 52 engage the grooves 61 of the locking ring 42 but not the grooves 51 of the frame, and the lower position (figure 7C), in which the latch 44 protrudes inferiorly from the locking ring 42 and the ribs 52 engage both the grooves 61 of the ring 42, and the grooves 51 of the frame 41, aligned with respect to each other so that the latch 44 prevents the rotation of the ring 42 with respect to the frame 41.

The latch 44 is internally hollow and has a inner locking seat 68, shaped so as to accommodate a hammer-head shaped terminal bulb 69 of the operation rod 27, set at a lower end of the rod 27; in particular, the seat 68 is shaped so as to accommodate the bulb 69 in two operating positions: a free position (figure 6), in which the bulb 69 can slide freely along axis X through the seat 68 and thus through the latch 44; and an engaged position (figures 5, 7A, 7B), in which the bulb 69 engages the seat 68 so that the bulb 69 and the latch 44 are angularly integral in a predetermined rotation direction about axis X, and so that the bulb 69 couples from underneath the latch 44 and lifts the latch 44 when the rod 27 moves vertically (axially) from the bottom upwards.

The seat 68 is shaped so that the bulb 69 is rotational in the seat 68 to selectively assume the free position and the engaged position by means of a rotation about axis X; in particular, the bulb 69 passes from the free position to the engaged position by effect of a 90° rotation.

In greater detail, the seat 68 has an inlet slot 70, having substantially rectangular shape or, in all cases, length longer than the width, formed by an upper face 71 of the latch 44 and through which the bulb 69 is insertable in the seat 68; the seat 68 has an upper axial shoulder 72, facing downwards and cooperating, when the bulb 69 is in the engaged position, with an upper face 73 of the bulb 69 for axially coupling the bulb 69 to the latch 44, and at least one side abutment surface 74, perpendicular to the shoulder 72 and parallel to axis X, cooperating abuttingly with a side 75 of the bulb 69 when the bulb 69 is in the engaged position.

The latch 44 has a lower axial shoulder 76, facing upwards and opposite and facing the shoulder 72; the shoulder 76 is defined, for example, by a bottom wall 77 of the latch 44 opposite to the upper face 71; the shoulder 76 is shaped so as to abuttingly cooperate with the bulb 69 when the bulb 69 is moved downwards in the latch 44 until it comes into contact with the shoulder 76.

The cover 45 is coupled with the edge 56 of the flange 53 of the frame 41 and is shaped so as to enclose the ring 42, along with the flange 53. The cover 45 has a central through opening 79, delimited by a peripheral edge 80 through which the operation rod 27 is set; the edge 80 axially blocks the ring 42 and the latch 44 for preventing the removal through the opening 79. The ring 42 is axially locked between the shoulder 49 and the edge 80.

The cover 45 is provided with the seat 35a, constituted, in the case in point, by a through hole formed through the peripheral portion of the head 25 (specifically, the cover 45). Under the seat 35a is obtained a niche 82 aligned in the notch 55 of the frame 41. The cover 45 is provided with an eye hook 83 which extends vertically from an upper face of the cover 45 and is set eccentric with respect to axis X on the cover 45; the eye hook 83 has a transversal hole 84 for inserting a locking pin 85 (figure 2) carried by the structure 6; for example, the pin 85 is fitted on a mount 87, which is further provided with a bushing 88 in which the rod 27 is slidingly inserted.

The rod 27 is actuated by means of a motorized actuator assembly 89 (figure 1), preferably set over the free surface of the primary fluid, and which optionally also actuates the pin 85 by means of an actuator 90 (e.g. a pneumatic cylinder).

The operation of the system 1, and specifically of the auxiliary system 5 and of the movement and lock device 21, is the following.

The tool 20, when not in use, is in the resting position shown in the lower part of figure 1 and in figures 2 and 7A, coupled to the structure 6; in use, the tool 20 is carried by the device 21 to integrally couple with the grab member 2.

Figure 7 shows the movement sequence of the tool 20 from the structure 6 to the grab member 2.

In the resting position (figure 7A), the tool 20 is suspended by the operating rod 27, the bulb 69 of which engages the seat 68. The pin 85 is inserted in the hole 84 of the eye hook 83 and firmly restrains the tool 20 to the structure 6. The tool 20, and in particular axis X, is slightly inclined with respect to axis A (vertical), the tool 20 hanging by means of the eye hook 83, which is set eccentrically with respect to axis X on the cover 45. The portion 36 of the head 25, the notch 55 and the recess 67 are essentially aligned.

To use the tool 20, the actuator 90 extracts the pin 85 from the hole 84 of the eye hook 83; then (figure 7B), for example by means of an electric jack, the rod 27 is moved downwards, guided by the bushing 88. The pins 14 set on the grab member 2 are engaged in the seats 35 of the tool 20: in this configuration, all the relative movements between tool 20 and grab member 2 are locked except for the vertical upward movement of the tool 20 with respect to the grab member 2.

The latch 44 is in the upper portion and the bulb 69 is in the engaged position.

The rod 27 is thus turned by 90° (figure 7C); the bulb 69 turns, and consequently so does the latch 44 and the ring 42; the rotation of the ring 42 makes the axial locking element 62 engage the abutment element 63 of the grab member 2 from underneath, thus obtaining the axial coupling 64 between the tool 20 and the grab member 2, which axially and integrally couples the tool 20 to the grab member 2; the ring 42 thus completely locks the tool 20 onto the grab member 2.

The rod 27 is then further lowered along axis X so as to push the latch 44 downwards, which latch 44 passes to the lower position, in which the ribs 52 of the latch 44 engage the grooves 61 of the ring 42, and now also the grooves 51 of the frame 41.

The rod 27 is finally turned by 90° again to allow the removal of the tool 20.

The recovery operations of the tool 20 from the grab member 2 after use are carried out by reversing the previously described sequence.

Finally, it is understood that changes and variations can be made to the system described and shown herein without departing from the scope of protection of the appended claims.

## Claims

1. An auxiliary system (5) for assisting a movement system of fuel elements of a nuclear reactor comprising a grab member (2), a movable guide tool (20), extending substantially along an axis (X) and cooperating with the grab member (2) for guiding a fuel element (4) coupled to the grab member (2); and a movement and lock device (21) acting on the tool (20) for connecting in a releasable manner the tool (20) to the grab member (2) and that comprises: male and female connection elements (11, 34), set on the grab member (2) and on the tool (20) respectively, or vice versa, and cooperating for releasably coupling the tool (20) with the grab member (2) axially in a first translation direction along the axis (X); and a releasable safety mechanism (38), movable for locking axially the tool (20) with respect to the grab member (2) in a second translation direction along the axis (X), opposite to the first translation direction, and for preventing disengagement of the male and female connection elements (11, 34); the system being **characterized in that** the safety mechanism (38) comprises a latch (44), housed inside a locking ring (42), and a frame (41), fixed to the tool (20) and that supports the ring (42) so as the ring (42) can rotate around the axis (X); the latch (44) being coupled to the ring (42) via a grooved profile that connects angularly integral the latch (44) and the ring (42) and allows the latch (44) to axially slide along the axis (X) with respect to the ring (42); the latch (44) being movable axially for selectively engaging grooves (51) formed on the frame (41), so allowing or preventing rotation of the ring (42) with respect to the frame (41).

2. A system according to claim 1, wherein the male connection elements (11) comprise pins (14) and the female connection elements (34) comprise seats (35), and the pins (14) are insertable in the seats (35) by translation parallel to the axis (X) in said first translation direction.

3. A system according to claim 1 or 2, wherein the device (21) comprises a control head (25), fixed to the tool (20) and that extends along and around the axis (X), and an operation rod (27) cooperating with the control head (25) for operating the safety mechanism (38) and also for moving the tool (20).

4. A system according to one of the preceding claims, wherein the ring (42) carries an axial locking element (62) that selectively engages and releases an abutment element (63) of the grab member (2) by rotation of the ring (42) around the axis (X).

5. A system according to one of the preceding claims, wherein the ring (42) is operated via the operation rod (27), that inferiorly ends with a hammer-head shaped bulb (69) that engages an inner locking seat (68) formed in the latch (44); the seat (68) being shaped so as to house the bulb (69) in two working positions: a free position, in which the bulb (69) is freely slidable along the axis (X) through the seat (68); and an engaged position, in which the bulb (69) engages the seat (68) so as the bulb (69) and the latch (44) are angularly integral in a predetermined rotation direction around the axis (X), and so as the bulb (69) engages from beneath the latch (44) and rises the latch (44) when the operation rod (27) moves vertically upwards.

6. A system according to claim 5, wherein the seat (68) is shaped so as the bulb (69) is rotatable in the seat (68) for selectively assuming the free position and the engaged position by a rotation around the axis (X).

7. A system according to one of the preceding claims, wherein the tool (20) is provided with an eye hook (83) that projects vertically from an upper face of a cover (45) of the tool (20) and is set eccentric with respect to the axis (X) on the cover (45) ; the eye hook (83) having a transverse hole (84) for insertion of a locking pin (85).

8. A system according to one of the preceding claims, wherein the connection elements (11, 34) comprise at least one group (10) of male connection elements (11) formed by an upper element (11a) and by a pair of side-by-side lower elements (11b), set below the upper element (11a); the upper element (11a) and the lower elements (11b) engaging an upper seat (35a) and a pair of lower side-by-side lower seats (35b), set below the upper seat (35a).

## Patentansprüche

1. Ein Hilfssystem (5) zur Unterstützung eines Bewegungssystems für Brennelemente eines Nuklearreaktors, aufweisend ein Greifglied (2), ein bewegliches Fuhrungswerkzeug (20), das sich im wesentlichen längs einer Achse (X) erstreckt und mit dem Greifglied (2) zur Führung eines Brennelements (4), welches an das Greifglied (2) angekoppelt ist, zusammenarbeitet; und ein Bewegungs- und Arretiergerät (21), welches auf das Werkzeug (20) wirkt, um das Werkzeug (20) mit dem Greifglied (2) in einer lösbaren Weise zu verbinden und das aufweist:
Männliche und weibliche Verbindungselemente (11,34), die auf das Greifglied (2) bzw. auf das Werkzeug (20) gesetzt sind, oder umgekehrt, und die zur lösbaren Kopplung des Werkzeugs (20) an das Greifglied (2) axial in einer ersten Translationsrichtung längs der Achse (X) zusammenarbeiten; und einen lösbaren Sicherheitsmechanismus (38), der für eine axiale Arretierung des Werkzeugs (20) bezüglich des Greifglieds (2) in einer zweiten Translationsrichtung längs der Achse (X) beweglich ist, entgegengesetzt der ersten Translationsrichtung, und zur Verhinderung der Loslösung der männlichen und weiblichen Verbindungselemente (11, 34); wobei das System **dadurch gekennzeichnet ist, dass** der Sicherheitsmechanismus (38), einen Riegel (44), der innerhalb eines Arretierringes (42) beherbergt ist, und einen Rahmen (41) ausweist, der an das Werkzeug (20) befestigt ist und der den Ring (42) trägt, so dass der Ring (42) un die Achse (X) rotieren kann; wobei der Riegel (44) an den Ring (42) über ein Rillenprofil gekoppelt ist, das den Riegel (44) und den Ring (42) eckig integral verbindet und
gestattet, dass der Riegel (44) axial längs der Achse (X) mit Bezug auf den Ring (42) gleiten kann; wobei der Riegel (44) axial beweglich ist, um selektiv in die Rillen (5 1) greifen zu können, die auf dem Rahmen (41) geformt sind, um so die Rotation des Rings (42) bezüglich des Rahmens (41) zuzulassen oder zu verhindern.

2. System nach Anspruch 1, wobei die männlichen Verbindungselemente (11) Stifte (14) aufweisen und die weiblichen Verbindungselemente (34) Aufnahmen (35) umfassen, und die Stifte (14) in die Aufnahmen (35) durch Translation parallel zu der Achse (X) in der ersten Translationsrichtung einsetzbar sind.

3. System nach Anspruch 1 oder 2, wobei das Gerät (21) einen Kontrollkopf (25) aufweist der mit dem Werkzeug (20) fixiert ist und der sich längs der und um die Achse (X) erstreckt, und einen Bedienstab (27), der mit dem Kontrollkopf (25) zum Betrieb des Sicherheitsmechanismus (38) zusammenarbeitet und ebenso zur Bewegung des Werkzeugs (20).

4. System nach einem der vorhergehenden Ansprüche, wobei der Ring (42) ein axiales Verschlusselement (62) trägt, welches selektiv in ein Widerlagerelement (63) des Greifglieds (2) durch Rotation des Rings (42) un die Achse (X) eingreift und es loslässt.

5. System nach einem der vorhergehenden Ansprüche, wobei der Ring (42) mittels des Bedienstabs (27) betrieben wird, welcher am unteren Ende mit einer hammerkopfformigen Birne (69) endet, welche in einen inneren Verriegelungssitz (68) eingreift, der in dem Riegel (44) gebildet ist; wobei der Sitz (68) so geformt ist, dass er die Birne (69) in zwei Arbeitspositionen beherbergt: einer Freiposition, in welcher die Birne (69) längs der Achse (X) frei verschiebbar ist durch den Sitz (68); und einer eingerasteten Postition, in welcher die Birne (69) in den Sitz (68) eingreift, so dass die Birne (69) und der Riegel (44) eckig integral in einer vorbestimmten Rotationsrichtung um die Achse (x) sind, und so dass die Birne (69) von unterhalb des Riegels (44) eingreift und den Riegel (44) hochhebt, wenn der Bedienstab (27) sich vertikal auswärts bewegt.

6. System nach Anspruch 5, wobei der Sitz (68) so geformt ist, dass die Birne (69) im Sitz (68) rotierbar ist, um wahlweise die Freiposition und die eingerastete Position durch eine Rotation um die Achse (X) einzunehmen.

7. System nach einem der vorhergehenden Ansprüche, wobei das Werkzeug (20) mit einem Ösenhaken (83) versehen ist, der vertikal aus einer oberen Fläche einer Abdeckung (45) des Werkzeugs (20) herausragt und exzentrisch gesetzt ist in Bezug auf die Achse (X) auf der Abdeckung (45), wobei der Ösenhaken (83) eine Queröffnung (84) zum Einsetzen eines Verriegelungsstabs (85) aufweist.

8. System nach einem der vorhergehenden Ansprüche, wobei die Verbindungselemente (11, 34) wenigstens eine Gruppe (10) von männlichen Verbindungselementen (11) aufweisen, die durch ein oberes Element (11a) und durch ein Paar von Seite an Seite unteren Elementen (11b) geformt sind, welche unterhalb der oberen Elemente (11a) gesetzt sind; wobei das obere Element (11a) und die Elemente (11b) in einen oberen Sitz (35a) einrasten und ein Paar von unteren Seite an Seite Untersitzen (35b), die unterhalb der oberen Sitze (35a) gesetzt sind.

## Revendications

1. Système auxiliaire (5) pour assister un système de déplacement d'éléments combustibles d'un réacteur nucléaire comprenant un élément de préhension (2), un outil de guidage mobile (20) s'étendant sensiblement le long d'un axe (X) et coagissant avec l'élément de préhension (2) pour guider un élément combustible (4) couplé à l'élément de préhension (2) ; et un dispositif de déplacement et de verrouillage (21) agissant sur l'outil (20) pour relier de manière libérable l'outil (20) à l'élément de préhension (2) et qui comprend : des éléments de connexion mâles et femelles (11, 34) placés respectivement sur l'élément de préhension (2) et sur l'outil (20) ou vice versa, et coagissant pour le couplage libérable de l'outil (20) avec l'élément de préhension (2) axialement dans une première direction de translation le long de l'axe (X) ; et un mécanisme de sécurité libérable (38) mobile pour verrouiller axialement l'outil (20) par rapport à l'élément de préhension (2) dans une seconde direction de translation le long de l'axe (X), opposée à la première direction de translation et pour éviter le désengagement des éléments de connexion mâles et femelles (11, 34) ; le système étant **caractérisé en ce que** le mécanisme de sécurité (38) comprend un loquet (44) logé dans un anneau de verrouillage (42), et un cadre (41) fixé à l'outil (20) et qui supporte l'anneau (42) de sorte que l'anneau (42) puisse tourner autour de l'axe (X) ; le loquet (44) étant couplé à l'anneau (42) via un profilé rainuré qui relie angulairement et intégralement le loquet (44) et l'anneau (42) et permet au loquet (44) de coulisser axialement le long de l'axe (X) par rapport à l'anneau (42) ; le loquet (44) étant mobile axialement pour engager de manière sélective les rainures (51) formées sur le cadre (41), permettant ou évitant ainsi la rotation de l'anneau (42) par rapport au cadre (41).

2. Système selon la revendication 1, dans lequel les éléments de connexion mâles (11) comprennent des broches (14) et les éléments de connexion femelles (34) comprennent des sièges (35) et les broches (14) sont insérables dans les sièges (35) par translation parallèlement à l'axe (X) dans ladite première direction de translation.

3. Système selon la revendication 1 ou 2, dans lequel le dispositif (21) comprend une tête de commande (25) fixée à l'outil (20) et qui s'étend le long et autour de l'axe (X), et une tige d'actionnement (27) coagissant avec la tête de commande (25) pour actionner le mécanisme de sécurité (38) de même que pour déplacer l'outil (20).

4. Système selon l'une quelconque des revendications précédentes, dans lequel l'anneau (42) porte un élément de verrouillage axial (62) qui engage et libère de manière sélective un élément de butée (63) de l'élément de préhension (2) par rotation de l'anneau (42) autour de l'axe (X).

5. Système selon l'une quelconque des revendications précédentes, dans lequel l'anneau (42) est actionné via la tige d'actionnement (27) qui se termine au niveau inférieur par un bourrelet en tête de marteau (69) qui engage un siège de verrouillage intérieur (68) formé dans le loquet (44) ; le siège (68) étant formé de sorte à loger le bourrelet (69) dans deux positions de travail ; une position libre, dans laquelle le bourrelet (69) est librement coulissant le long de l'axe (X) par le siège (68) ; et une position engagée, dans laquelle le bourrelet (69) engage le siège (68) de sorte que le bourrelet (69) et le loquet (44) soient intégralement angulaires dans une direction de rotation prédéterminée autour de l'axe (X), et de sorte que le bourrelet (69) engage le loquet (44) depuis le dessous et le remonte lorsque la tige d'actionnement (27) se déplace verticalement vers le haut.

6. Système selon la revendication 5, dans lequel le siège (68) est formé de sorte que le bourrelet (69) puisse être tourné dans le siège (68) pour occuper de manière sélective la position libre et la position engagée par une rotation autour de l'axe (X).

7. Système selon l'une quelconque des revendications précédentes, dans lequel l'outil (20) est doté d'un crochet à oeil (83) qui fait saillie verticalement d'une face supérieure d'un couvercle (45) de l'outil (20) et est placé de manière excentrée par rapport à l'axe (X) sur le couvercle (45) ; le crochet à oeil (83) présentant un trou transversal (84) pour l'insertion d'une goupille de sécurité (85).

8. Système selon l'une quelconque des revendications précédentes, dans lequel les éléments de connexion (11, 34) comprennent au moins un groupe (10) d'éléments de connexion mâles (11) formés par un élément supérieur (11a) et par une paire d'éléments inférieurs juxtaposés (11b), placés sous l'élément supérieur (11a) ; l'élément supérieur (11a) et les éléments inférieurs (11b) engageant un siège supérieur (35a) et une paire de sièges inférieurs juxtaposés (35b) placés sous le siège supérieur (35a).
